# EUROPÄISCHE PATENTSCHRIFT

(11) **EP 3 659 204 B1**
(45) Veröffentlichungstag und Bekanntmachung des Hinweises auf die Patenterteilung: **26.06.2024**
(21) Anmeldenummer: 18746880.6
(22) Anmeldetag: 24.07.2018
(51) Int. Cl.: B60L 3/00, B60L 58/26, H01M 10/48, H01M 10/617, H01M 10/6568

(54) **TEMPERIERVORRICHTUNG FÜR EINE TEMPERIERUNG EINES BATTERIESYSTEMS, BATTERIESYSTEM SOWIE VERFAHREN ZUM TEMPERIEREN UND/ODER LÖSCHEN EINES BATTERIESYSTEMS**
TEMPERATURE-CONTROL DEVICE FOR CONTROLLING THE TEMPERATURE OF A BATTERY SYSTEM, BATTERY SYSTEM, AND METHOD FOR CONTROLLING THE TEMPERATURE OF AND/OR EXTINGUISHING A BATTERY SYSTEM
DISPOSITIF DE RÉGULATION DE TEMPÉRATURE POUR RÉGULER LA TEMPÉRATURE D'UN SYSTÈME DE BATTERIE, SYSTÈME DE BATTERIE ET PROCÉDÉ POUR RÉGULER LA TEMPÉRATURE ET/OU ÉTEINDRE L'INCENDIE D'UN SYSTÈME DE BATTERIE

(30) Priorität: 27.07.2017 DE 102017116981
(43) Veröffentlichungstag der Anmeldung: 03.06.2020
(73) Patentinhaber: Lion Smart GmbH, 85748 Garching (DE)
(72) Erfinder: BEHLEN, Christian, 83135 Schechen (DE); MAYER, Tobias, 80805 München (DE); QUINGER, Daniel, 82211 Herrsching (DE)
(74) Vertreter: Bals & Vogel Patentanwälte PartGmbB
(86) Internationale Anmeldenummer: PCT/EP2018/070059
(87) Internationale Veröffentlichungsnummer: WO 2019/020639

(56) Entgegenhaltungen:
- CN-A- 106 356 584
- DE-A1-102008 035 216
- DE-A1-102013 018 414
- DE-A1-102015 212 334
- US-A1- 2013 140 001

## Beschreibung

Die Erfindung betrifft eine Temperiervorrichtung für eine Temperierung eines Batteriesystems mit zumindest einem Batterieteilsystem, die Temperiervorrichtung aufweisend eine Temperierleitung zum Leiten eines Temperierfluids und eine Pumpvorrichtung zum Erzeugen einer Strömung des Temperierfluids in der Temperierleitung zumindest in einer ersten Strömungsrichtung, wobei die Temperierleitung zumindest einen mit dem zumindest einen Batterieteilsystem thermisch leitend verbindbaren Temperierabschnitt zur Zufuhr und/oder Abfuhr von Wärmeenergie zu dem oder von dem Batterieteilsystem aufweist. Ferner betrifft die Erfindung ein Batteriesystem, aufweisend zumindest ein Batterieteilsystem und eine Temperiervorrichtung sowie ein Verfahren zum Temperieren und/oder Löschen eines derartigen Batteriesystems, wobei für ein Temperieren des Batteriesystems die Pumpvorrichtung eine Strömung des Temperierfluids in der Temperierleitung in der ersten Strömungsrichtung erzeugt.

Elektrische Energiespeicher werden in der modernen Technik weitläufig eingesetzt, beispielsweise in Elektrofahrzeugen. Mögliche Ausgestaltungsformen derartiger Energiespeicher sind beispielsweise Lithium-Ionen-Batterien. Um eine Leistungsfähigkeit derartiger Batterien zu steigern, ist es zum Beispiel bekannt, mehrere einzelne Batterieteilsysteme in einer Batterieebene elektrisch parallel zu verschalten. Um eine weitere Steigerung zu erzielen, können zwei oder mehrere dieser Batterieebenen zu einem Batteriestapel seriell verschaltet werden. Dazu können insbesondere die einzelnen Batterieebenen aufeinander angeordnet und elektrisch leitend verbunden werden.

Während eines Betriebs eines Batteriesystems kommt es zumeist zu einer nicht zu vernachlässigenden Wärmeentwicklung. Jedoch auch eine zu niedrige Temperatur des Batteriesystems ist für ein effektives Betreiben eines Batteriesystems hinderlich. Eine Temperierung des Batteriesystems, insbesondere der einzelnen Batterieteilsysteme des Batteriesystems, ist daher zumeist unumgänglich. Thermische Schäden an den Batterieteilsystemen oder dem gesamten Batteriesystem können durch ein Vorhandensein von Temperiervorrichtungen vermieden werden. Bekannte Temperiervorrichtungen weisen oftmals eine Temperierleitung auf, in der ein Temperierfluid strömt, zumeist angetrieben durch eine Pumpvorrichtung. Durch eine thermisch leitende Verbindung der Temperierleitung, beispielsweise eines Temperierabschnitts der Temperierleitung, mit den einzelnen Batterieteilsystemen eines Batteriesystems kann thermische Energie, mit anderen Worten eine Abwärme der Batterieteilsysteme, durch das Temperierfluid aufgenommen und von den Batterieteilsystemen wegtransportiert werden beziehungsweise durch das Temperierfluid an die Batterieteilsysteme herangeführt und an diese abgegeben werden.

Ferner kann auch bei Batteriesystemen ein Entstehen von Feuer und/oder von Bränden nicht gänzlich vermieden werden, insbesondere bei extremen externen Einwirkungen, wie sie zum Beispiel bei einem Einsatz eines Batteriesystems in einem Fahrzeug bei einem Unfall dieses Fahrzeugs auftreten können. Um eine unnötig große Beschädigung des Batteriesystems und insbesondere eine Gefährdung der Umgebung des Batteriesystems durch ein derartiges Feuer bzw. einen derartigen Brand zu vermeiden, ist es vorteilhaft, ein derartiges Feuer möglichst schnell zu löschen. Gemäß dem Stand der Technik ist es daher bekannt, in Batteriesystemen zusätzliche Löschvorrichtungen einzusetzen, die im Falle eines Feuers bzw. Brandes für eine schnelle Löschung des Feuers sorgen. Nachteilig hierbei ist jedoch, dass diese zusätzlichen Löschvorrichtungen auch einen zusätzlichen Bauraumbedarf bedingen, so dass das Batteriesystem insgesamt weniger kompakt aufgebaut werden kann. Auch sind derartige zusätzliche Löschvorrichtungen oftmals aufwendig und insbesondere kostenintensiv.

Die Druckschrift DE 10 2015 212 334 A1 beschreibt eine Vorrichtung und ein Verfahren zur Kühlung mindestens einer Batteriezelle.

Es ist daher Aufgabe der vorliegenden Erfindung, die voranstehend beschriebenen Nachteile zumindest teilweise zu beheben. Insbesondere ist es Aufgabe der vorliegenden Erfindung, in kostengünstiger und einfacher Weise eine Temperiervorrichtung, ein Batteriesystem sowie ein Verfahren zum Temperieren und/oder Löschen eines Batteriesystems bereitzustellen, durch die neben einer Temperierung des Batteriesystems auch eine vereinfachte Löschung eines eventuell auftretenden Feuers bzw. Brandes im Batteriesystem bereitgestellt werden kann, wobei insbesondere bereits vorhandene Komponenten der Temperiervorrichtung auch zum Löschen von Feuer bzw. Bränden innerhalb des Batteriesystems verwendbar sind beziehungsweise verwendet werden können.

Voranstehende Aufgabe wird gelöst durch eine Temperiervorrichtung mit den Merkmalen des unabhängigen Anspruchs 1, durch ein Batteriesystem mit den Merkmalen des nebengeordneten Anspruchs 11 sowie durch ein Verfahren zum Temperieren und/oder Löschen eines Batteriesystems mit den Merkmalen des nebengeordneten Anspruchs 12. Weitere Merkmale und Details der Erfindung ergeben sich aus den Unteransprüchen, der Beschreibung und den Zeichnungen. Dabei gelten Merkmale und Details, die im Zusammenhang mit der erfindungsgemäßen Temperiervorrichtung beschrieben sind, selbstverständlich auch im Zusammenhang mit dem erfindungsgemäßen Batteriesystem sowie dem erfindungsgemäßen Verfahren und jeweils umgekehrt, so dass bezüglich der Offenbarung zu den einzelnen Erfindungsaspekten stets wechselseitig Bezug genommen wird bzw. werden kann.

Gemäß einem ersten Aspekt der Erfindung wird die Aufgabe gelöst durch eine Temperiervorrichtung für eine Temperierung eines Batteriesystems mit zumindest einem Batterieteilsystem, die Temperiervorrichtung aufweisend eine Temperierleitung zum Leiten eines Temperierfluids und eine Pumpvorrichtung zum Erzeugen einer Strömung des Temperierfluids in der Temperierfluidleitung zumindest in einer ersten Strömungsrichtung, wobei die Temperierleitung zumindest einen mit der zumindest einen Batterieteilsystem thermisch leitend verbindbaren Temperierabschnitt zur Zufuhr und/oder Abfuhr von Wärmeenergie zu dem oder von dem Batterieteilsystem aufweist. Eine erfindungsgemäße Temperiervorrichtung ist dadurch gekennzeichnet, dass in der Temperierleitung bezüglich der ersten Strömungsrichtung vor dem zumindest einen Temperierabschnitt ein Rückschlagventil angeordnet ist, wobei das Rückschlagventil in der ersten Strömungsrichtung für das Temperierfluid durchgängig ist und in einer zweiten Strömungsrichtung sperrt, wobei die zweite Strömungsrichtung der ersten Strömungsrichtung entgegengesetzt ist.

Eine erfindungsgemäße Temperiervorrichtung ist zum Temperieren eines Batteriesystems ausgebildet. Unter Temperieren im Sinne der Erfindung ist insbesondere ein kontrolliertes Verändern einer Temperatur des Batterieteilsystems durch die Temperiervorrichtung zu verstehen, sowohl ein Erwärmen als auch ein Abkühlen. Ein Unterkühlen als auch ein Überhitzen des Batterieteilsystems und dadurch des gesamten Batteriesystems kann dadurch vermieden werden. Das Batteriesystem weist zumindest ein Batterieteilsystem auf, kann bevorzugt auch mehrere Batterieteilsysteme, insbesondere angeordnet in mehreren Batterieebenen, aufweisen. Als Batterieteilsystem im Sinne der Erfindung wird insbesondere eine einzelne Batteriezelle, aber auch eine Gruppe von Batteriezellen verstanden. Bevorzugt ist die Temperiervorrichtung zum Temperieren jeder der Batterieteilsysteme ausgebildet. Für jedes der temperierbaren Batterieteilsysteme, insbesondere für ein Batterieteilsystem, weist die Temperiervorrichtung einen Temperierabschnitt auf, der mit dem jeweiligen Batterieteilsystem thermisch leitend verbindbar ist. Eine Pumpvorrichtung der Temperiervorrichtung erzeugt eine Strömung eines Temperierfluids in der Temperierleitung, wodurch das Temperierfluid durch die Temperierleitung und insbesondere durch den Temperierabschnitt strömt. Das Temperierfluid kann beispielsweise als Gas, als Flüssigkeit und/oder in einem Mischzustand vorliegen. Auf diese Weise kann durch das Temperierfluid in der Temperierleitung Wärmeenergie von den jeweiligen Batterieteilsystemen aufgenommen und von diesen abtransportiert beziehungsweise an diese herangeführt und abgegeben werden. Die Temperiervorrichtung kann auch noch weitere Bestandteile aufweisen, beispielsweise einen Ausgleichsbehälter, ein Temperierfluidreservoir, eine Temperierfluidheizung, einen Radiator und/oder einen Wärmetauscher zur Abgabe der von den Batterieteilsystemen aufgenommenen Wärmeenergie, insbesondere beispielsweise an die Umwelt.

Erfindungsgemäß ist vorgesehen, dass die Temperiervorrichtung des Batteriesystems auch für ein Löschen eines Feuers oder Brandes, das im Batteriesystem auftritt, verwendbar ist. Für diesen Zweck weist die Temperiervorrichtung ein Rückschlagventil auf, das in der Temperierleitung bezüglich der ersten Strömungsrichtung vor dem zumindest einen Temperierabschnitt angeordnet ist. Mit anderen Worten ist das Rückschlagventil derart in der Temperierleitung angeordnet, dass das Temperierfluid, von der Pumpvorrichtung kommend, zuerst durch das Rückschlagventil strömt und erst dann in den zumindest einen Temperierabschnitt eintritt. Das Rückschlagventil ist in dieser ersten Strömungsrichtung durchgängig, so dass durch das Rückschlagventil im Normal- beziehungsweise Temperierbetrieb der Temperiervorrichtung eine von der Pumpvorrichtung angetriebene Strömung des Temperierfluids nicht oder zumindest nur wenig beeinträchtigt ist. In einer zweiten Strömungsrichtung, die entgegengesetzt der ersten Strömungsrichtung ist, sperrt das Rückschlagventil. Dies wird zur Bereitstellung der Löschfunktionalität der erfindungsgemäßen Temperiervorrichtung eingesetzt. So kommt es bei Auftreten eines Feuers bzw. Brandes im Inneren eines Batteriesystems zumeist zu einer lokalen Zerstörung der Temperierleitung eben durch dieses Feuer. In der Temperierleitung kann auf diese Weise beispielsweise eine sogenannte Leckagestelle entstehen. Des Weiteren kann ein Feuer im Batteriesystem beispielsweise durch die Temperiervorrichtung erkannt werden, zum Beispiel durch ein Detektieren einer Veränderung des Temperierfluids, beispielsweise eines Drucks des Temperierfluids. Eine derartige Druckveränderung des Temperierfluids kann zum Beispiel durch ein lokales Verdampfen des Temperierfluids durch die Hitzeeinwirkung des Feuers oder auch durch einen Druckabfall an Temperierfluid, der bei einem Austritt des Temperierfluids durch die oben beschriebene Leckagestelle auftritt, detektiert werden. In einem derartig erkannten Feuer- bzw. Brandfall kann bevorzugt die Pumpvorrichtung der Temperiervorrichtung den Pumpvorgang in der ersten Strömungsrichtung einstellen. Bevorzugt wird in diesem Fall eine Strömung des Temperierfluids in der zweiten Strömungsrichtung in der Temperierleitung erzeugt, beispielsweise durch eine zusätzliche Pumpe, durch ein entsprechendes Ansteuern der vorhandenen Pumpvorrichtung, aber auch beispielsweise durch eine gravitative Einwirkung auf das Temperierfluid. Durch das oben beschriebene Rückschlagventil ist grundsätzlich ein Strömen des Temperierfluids in der Temperierleitung in der zweiten Strömungsrichtung behindert, bevorzugt sogar gänzlich blockiert. Jedoch befindet sich, wie ebenfalls oben beschrieben, im Bereich des Feuers zumeist eine Leckagestelle, so dass dort das Temperierfluid austreten kann und auf diese Weise eine Strömung des Temperierfluids in der zweiten Strömungsrichtung ermöglicht ist. Mit anderen Worten strömt das Temperierfluid im Falle eines Feuers in der zweiten Strömungsrichtung lediglich an den Ort des Feuers, sämtliche andere möglichen Strömungspfade innerhalb der Temperierleitung der Temperiervorrichtung sind durch das Rückschlagventil blockiert. Durch das Zuführen von Temperierfluid an den Ort des Feuers kann dieses gelöscht werden oder zumindest ein Abtransport von Wärmeenergie von dieser lokal sehr großen Hitzequelle ermöglicht werden. Das auftretende Feuer kann auf diese Weise vorteilhaft schnell gelöscht, zumindest jedoch seine thermischen Auswirkungen durch Abtransport der Wärmeenergie minimiert werden. Insgesamt kann dies durch die bereits vorhandene Temperiervorrichtung bereitgestellt werden, so dass keine zusätzlichen Löschvorrichtungen nötig sind oder die dennoch verbauten Löschvorrichtungen zumindest deutlich kleiner dimensioniert werden können. Ein Batteriesystem mit einer derartigen Temperiervorrichtung kann somit insbesondere kompakter geplant und konstruiert werden beziehungsweise ausgebildet sein.

Ferner kann bei einer erfindungsgemäßen Temperiervorrichtung vorgesehen sein, dass die Pumpvorrichtung zum Bereitstellen des Temperierfluids an einer, insbesondere durch ein Feuer erzeugten, Leckagestelle zum Erzeugen einer Strömung des Temperierfluids in der Temperierleitung in der zweiten Strömungsrichtung ausgebildet ist. In dieser besonders bevorzugten Ausgestaltungsform einer erfindungsgemäßen Temperiervorrichtung wird die bereits vorhandene Pumpvorrichtung verwendet, um eine Strömung des Temperierfluids in der Temperierleitung in der zweiten Strömungsrichtung bereitzustellen. Zusätzliche Pumpen oder die Abhängigkeit von einer gravitativen Bereitstellung einer Strömung des Temperierfluids in der zweiten Strömungsrichtung können dadurch vermieden werden. Ein noch kompakterer Aufbau einer erfindungsgemäßen Temperiervorrichtung und dadurch eines Batteriesystems mit einer derartigen Temperiervorrichtung sowie eine Steigerung der Sicherheit beim Löschen eines Feuers im Inneren des Batteriesystems können dadurch ermöglicht werden.

Gemäß einer bevorzugten Weiterentwicklung kann bei einer erfindungsgemäßen Temperiervorrichtung ferner vorgesehen sein, dass die Temperierleitung am Temperierabschnitt und/oder in der Nähe des Temperierabschnitts einen Sicherheitsabschnitt zum kontrollierten Erzeugen, insbesondere bei einem Feuer, der Leckagestelle aufweist. Doch einen derartigen Sicherheitsabschnitt kann ein Abschnitt an der Temperierleitung des Batteriesystems bereitgestellt beziehungsweise definiert werden, der eine hohe Wahrscheinlichkeit aufweist, dass an ihm die Leckagestelle in einem Brandfall auftritt. Bevorzugt ist diese Wahrscheinlichkeit 100% oder zumindest nur unwesentlich geringer als 100%. Ferner weist bevorzugt jeder Temperierabschnitt eines jeden Batterieteilsystems einen derartigen Sicherheitsabschnitt auf. Durch einen derartigen Sicherheitsabschnitt kann mit anderen Worten zumindest mit großer Wahrscheinlichkeit diejenige Position entlang der Temperierleitung bestimmt werden, an der im Falle eines Feuers die Leckagestelle auftritt. Ein Auslegen des gesamten Batteriesystems auf diese Position der Leckagestelle kann dadurch ermöglicht werden, wodurch insgesamt wiederum eine Steigerung einer Sicherheit bei einem Betrieb des Batteriesystems bereitstellbar ist.

Besonders bevorzugt kann eine erfindungsgemäße Temperiervorrichtung dahin gehend weiterentwickelt sein, dass der Sicherheitsabschnitt ein Ventilelement aufweist, wobei das Ventilelement durch ein kontrolliertes Öffnen bei einer Überschreitung einer Grenztemperatur und/oder eines Grenzdrucks, insbesondere des Temperierfluids, durch kontrolliertes Öffnen die Leckagestelle ausbildet. Ein derartiges Ventilelement stellt eine besonders sichere und insbesondere zumindest im Vorfeld eines Betriebs des Batteriesystems einstellbare Möglichkeit eines Erzeugens der Leckagestelle dar. Auch ein Ort der Leckagestelle kann noch ein derartiges Ventilelement noch präziser planbar ausgestaltet werden. Ein unkontrolliertes Auftreten der Leckagestelle, beispielsweise durch ein Platzen der Temperierleitung durch die Hitzeeinwirkung während eines Feuers oder Brandes, kann dadurch vermieden werden.

Gemäß einer ersten alternativen Ausgestaltungsform kann eine erfindungsgemäße Temperiervorrichtung dahin gehend weiterentwickelt sein, dass die Temperiervorrichtung zumindest eine Sensorvorrichtung zum Ermitteln einer Temperatur und/oder eines Drucks und/oder einer Verdampfung des Temperierfluids sowie eine Kontrolleinheit zum Auswerten der durch die Sensorvorrichtung ermittelten Sensordaten und zum Ansteuern des Ventilelements für ein Öffnen des Ventilelements bei einer Überschreitung der Grenztemperatur und/oder des Grenzdrucks aufweist. In dieser ersten alternativen Ausgestaltungsform beinhaltet das Erzeugen der Leckagestelle somit ein Messen von Eigenschaften des Temperierfluids, ein Auswerten dieser Eigenschaften und ein dadurch gesteuertes Öffnen der Ventilvorrichtung. Durch das Messen und Auswerten der Eigenschaften des Temperierfluids kann insbesondere ein Erkennen eines Feuers und/oder Brandes bereitgestellt werden. Dies bringt insbesondere den Vorteil mit sich, dass das Öffnen der Ventilvorrichtung besonders genau einstellbar und/oder regelbar ist. Insbesondere auch eine nachträgliche Änderung von Auslösekriterien für ein Öffnen der Ventilvorrichtung kann dadurch bereitgestellt werden. Darüber hinaus kann auch ein Schließen des Ventilelements vorgesehen sein, insbesondere dann, wenn die Grenztemperatur und/oder der Grenzdruck wieder unterschritten werden. Eine besonders schnelle Wiederaufnahme eines Regelbetriebs des Batteriesystems kann auf diese Weise bereitgestellt werden.

In einer alternativen Weiterentwicklung einer erfindungsgemäßen Temperiervorrichtung kann ferner vorgesehen sein, dass das Ventilelement als ein Berstventil ausgebildet ist, das bei einer Überschreitung der Grenztemperatur und/oder eines Grenzdrucks des Temperierfluids durch ein kontrolliertes Bersten die Leckagestelle ausbildet. Ein derartiges Berstventil stellt somit insbesondere ein automatisches Öffnen des Ventilelements sicher, sobald eine Überschreitung der Grenztemperatur und/oder des Grenzdrucks des Temperierfluids eintritt. Dies stellt eine besonders einfache und sichere Ausgestaltungsform einer erfindungsgemäßen Temperiervorrichtung dar, da keine externe Regelung bzw. Ansteuerung des Ventilelements zum Öffnen des Ventilelements beim Erzeugen der Leckagestelle nötig ist. Beispielsweise kann durch diese Ausgestaltungsform auch sichergestellt werden, dass die Leckagestelle erzeugt wird, auch wenn eine Auswertung von Sensordaten, zum Beispiel durch eine Unterbrechung einer Stromversorgung einer Kontrolleinheit, nicht mehr möglich ist.

Ferner kann bei einer erfindungsgemäßen Temperiervorrichtung vorgesehen sein, dass beide voranstehend beschriebenen Alternativen parallel verwendet werden. So kann beispielsweise ein gesteuertes Öffnen und Schließen eines Ventilelements für einen niedrigeren Temperatur- bzw. Druckbereich vorgesehen sein, wohingegen ein zusätzliches Ventilelement, das als Berstventil ausgebildet ist, bei einer höheren Temperatur- bzw. Druckeinwirkung öffnet und so eine ausreichende Größe der Leckagestelle sicherstellt. Die Vorteile beider alternativen Ausgestaltungsformen können so auch gemeinsam genutzt werden.

Auch kann eine erfindungsgemäße Temperiervorrichtung dahin gehend ausgebildet sein, dass die Temperierleitung mit einem elektrisch isolierten Temperierfluid gefüllt ist. Auf diese Weise kann sichergestellt werden, dass auch bei einem Austreten des Temperierfluids aus der Leckagestelle im Brandfall kein Kurzschluss innerhalb des Batteriesystems auftritt, der durch eine elektrisch leitende Verbindung von offenen Kontakten des Batteriesystems durch das Temperierfluid erzeugt wird. Eine Sicherheit des gesamten Batteriesystems kann dadurch erhöht werden.

Darüber hinaus kann eine erfindungsgemäße Temperiervorrichtung dahin gehend ausgebildet sein, dass das Batteriesystem mehrere Batterieteilsysteme aufweist, wobei die Temperierleitung für jedes der Batterieteilsysteme einen Temperierzweig mit jeweils einem Temperierabschnitt für das jeweilige Batterieteilsystem aufweist, wobei ferner in jedem Temperierzweig bezüglich der ersten Strömungsrichtung vor dem jeweiligen Temperierabschnitt ein Rückschlagventil angeordnet ist, wobei das Rückschlagventil in der ersten Strömungsrichtung durchgängig ist und in der zweiten Strömungsrichtung sperrt. Mit anderen Worten spaltet beziehungsweise verzweigt sich die Temperierleitung in mehrere Temperierzweige, die jeweils einen Temperierabschnitt zum Temperieren eines eigenen Bereichs innerhalb des Batteriesystems aufweisen. In dieser besonders bevorzugten Ausgestaltungsform einer erfindungsgemäßen Temperiervorrichtung ist ferner jeder der Temperierzweige separat mit einem eigenen Rückschlagventil ausgestattet. Auf diese Weise kann beispielsweise sichergestellt werden, dass die gesamte Sperrlast bezüglich der Strömung des Temperierfluids in der zweiten Strömungsrichtung auf viele Rückschlagventile verteilt wird. Die einzelnen Rückschlagventile können in diesem Fall kleiner dimensioniert ausgebildet sein. Insgesamt kann in dieser Ausgestaltungsform eine nochmalige Steigerung der Sicherheit eines Batteriesystems mit einer erfindungsgemäßen Temperiervorrichtung bereitgestellt werden, da jedes der Batterieteilsysteme einen eigenen Temperierzweig aufweist, der separat mit einem eigenen Rückschlagventil abgesichert ist.

Auch kann bei einer erfindungsgemäßen Temperiervorrichtung ferner vorgesehen sein, dass die Temperierleitung Teil eines geschlossenen Temperierkreislaufs ist. In diesem geschlossenen Temperierkreislauf wird insbesondere das Temperierfluid umgewälzt und somit ständig wiederverwendet. Ein besonders sparsamer Einsatz des Temperierfluids kann auf diese Weise bereitgestellt werden. Eine derart ausgebildete Temperiervorrichtung ist somit durch das ständige Wiederverwenden des Temperierfluids besonders einfach ausgebildet und darüber hinaus zum Bereitstellen einer besonders effektiven Temperierung des Batteriesystems ausgebildet.

Auch kann eine erfindungsgemäße Temperiervorrichtung bevorzugt dahin gehend ausgebildet sein, dass in der Temperierleitung ein Überdruckventil angeordnet ist. Durch ein derartiges Überdruckventil kann besonders einfach erkannt werden, wenn sich in der Temperierleitung verdampftes Temperierfluid ansammelt, das beispielsweise lokal durch ein Feuer erzeugt wird. Besonders bevorzugt kann vorgesehen sein, dass dieses Überdruckventil mit einer Sensorvorrichtung zum Erkennen eines Feuers gekoppelt ist. Für den Fall, dass der Druck in der Temperierleitung über einen Grenzdruck ansteigt, wie es beispielsweise durch ein massives Verdampfen des Temperierfluids im Falle eines Brandes sein kann, öffnet das Überdruckventil und durch die Sensorvorrichtung kann auf diese Weise das Feuer besonders einfach, schnell und sicher erkannt werden. Darüber hinaus kann durch ein derartiges Überdruckventil sichergestellt werden, dass eine Beschädigung der Temperierleitung bzw. der gesamten Temperiervorrichtung durch einen Überdruck an Temperierfluid in der Temperierleitung vermieden werden kann.

Gemäß einem zweiten Aspekt der Erfindung wird die Aufgabe gelöst durch ein Batteriesystem, aufweisend zumindest ein Batterieteilsystem und eine Temperiervorrichtung. Ein erfindungsgemäßes Batteriesystem ist dadurch gekennzeichnet, dass die Temperiervorrichtung gemäß dem ersten Aspekt der Erfindung ausgebildet ist. Sämtliche Vorteile, die ausführlich in Bezug auf eine Temperiervorrichtung gemäß dem ersten Aspekt der Erfindung beschrieben worden sind, können somit auch durch ein Batteriesystem gemäß dem zweiten Aspekt der Erfindung bereitgestellt werden, das eine derartige Temperiervorrichtung gemäß dem ersten Aspekt der Erfindung aufweist.

Gemäß einem dritten Aspekt der Erfindung wird die Aufgabe gelöst durch ein Verfahren zum Temperieren und/oder Löschen eines Batteriesystems gemäß dem zweiten Aspekt der Erfindung, wobei für ein Temperieren des Batteriesystems die Pumpvorrichtung eine Strömung des Temperierfluids in der Temperierleitung in der ersten Strömungsrichtung erzeugt. Ein erfindungsgemäßes Verfahren ist durch folgende Schritte gekennzeichnet:
a) Erkennen eines Feuers im Inneren des Batteriesystems, und
b) Ansteuern der Pumpvorrichtung zur Erzeugung einer Strömung des Temperierfluids in der zweiten Strömungsrichtung.

Ein erfindungsgemäßes Verfahren wird in einem Batteriesystem gemäß dem zweiten Aspekt der Erfindung durchgeführt. Ein Batteriesystem gemäß dem zweiten Aspekt der Erfindung weist insbesondere eine Temperiervorrichtung gemäß dem ersten Aspekt der Erfindung auf. Sämtliche Vorteile, die ausführlich in Bezug auf ein Batteriesystem gemäß dem zweiten Aspekt der Erfindung und insbesondere in Bezug auf eine Temperiervorrichtung gemäß dem ersten Aspekt der Erfindung beschrieben worden sind, können somit auch durch ein Verfahren gemäß dem dritten Aspekt der Erfindung bereitgestellt werden.

Ein erfindungsgemäßes Verfahren ist zum Temperieren eines Batteriesystems ausgebildet. Für diese Temperiereigenschaft wird die Pumpvorrichtung der Temperiervorrichtung des Batteriesystems derart betrieben, dass das Temperierfluid in der Temperierleitung in der ersten Strömungsrichtung fließt. Zumindest ein Temperierabschnitt, bevorzugt mehrere Temperierabschnitte, der Temperierleitung sind an zumindest einem oder mehreren Batterieteilsystemen des Batteriesystems thermisch leitend angeordnet, so dass durch die Strömung des Temperierfluids ein Abtransport von Abwärme von den Batterieteilsystemen beziehungsweise ein Zuführen von Wärmeenergie an die Batterieteilsysteme erfolgen kann. Ein Temperieren dieser Batterieteilsysteme, und dadurch des gesamten Batteriesystems, kann somit bereitgestellt werden.

Die Schritte a) und b) eines erfindungsgemäßen Verfahrens sind insbesondere für den Fall vorgesehen, wenn im Batteriesystem ein Feuer ausgebrochen ist bzw. ausbricht. So wird im Schritt a) eines erfindungsgemäßen Verfahrens das Feuer im Inneren des Batteriesystems erkannt. Dieses Erkennen kann beispielsweise durch ein Auswerten von geeigneten Sensordaten durch eine Kontrollvorrichtung vorgenommen werden. Auch ein externes Ansteuern der Temperiervorrichtung im Sinne eines erfindungsgemäßen Verfahrens bei Erkennen des Feuers durch externe Sensoren ist durch einen Schritt a) eines erfindungsgemäßen Verfahrens umfasst. Im nächsten Schritt b) eines erfindungsgemäßen Verfahrens wird beim Vorliegen eines Feuers die Pumpvorrichtung der Temperiervorrichtung derart angesteuert, dass es zu einer Erzeugung einer Strömung des Temperierfluids in der Temperierleitung in der zweiten Strömungsrichtung kommt. Die zweite Strömungsrichtung ist der ersten Strömungsrichtung, die während des Temperierbetriebs der Temperiervorrichtung verwendet wird, entgegengesetzt. Durch das Vorhandensein zumindest eines Rückschlagventils in der Temperierleitung ist eine Strömung des Temperierfluids in der Temperierleitung in der zweiten Strömungsrichtung grundsätzlich blockiert. Lediglich an Stellen im Batteriesystem, an denen bedingt durch das Feuer Leckagestellen entstanden sind, kann das Temperierfluid ausströmen. Somit wird exklusiv diesen Leckagestellen, und damit lokal an diejenigen Positionen im Batteriesystem, an denen Feuer vorhanden ist, Temperierfluid zugeführt. Ein Löschen des Feuers oder zumindest ein Abführen von Wärmeenergie vom Feuer kann auf diese Weise durch ein erfindungsgemäßes Verfahren besonders einfach bereitgestellt werden. Eine Beschädigung des Batteriesystems durch das Feuer kann auf diese Weise verhindert oder zumindest deutlich vermindert werden.

Ein erfindungsgemäßes Verfahren ist derart ausgestaltet, dass in Schritt a) ein Feuer durch eine Auswertung von Sensordaten einer Sensorvorrichtung zum Ermitteln einer Temperatur und/oder eines Drucks und/oder einer Verdampfung des Temperierfluids erkannt wird. Beim Auftreten eines Feuers im Batteriesystem wird das Temperierfluid lokal sehr stark erhitzt, insbesondere deutlich mehr, als im normalen Temperierbetrieb. Die Erhitzung des Temperierfluids erfolgt oftmals derart stark, dass es über seinen Siedepunkt erhitzt wird und somit verdampft. Durch ein Ermitteln einer Temperatur und/oder eines Drucks und/oder einer Verdampfung des Temperierfluids kann somit auf besonders einfache Art und Weise ein Erkennen eines Feuers im Inneren des Batteriesystems bereitgestellt werden. Zusätzliche externe Sensoren zur Branderkennung können somit eingespart werden.

Darüber hinaus kann bei einem erfindungsgemäßen Verfahren vorgesehen sein, dass in Schritt b) die Pumpvorrichtung derart angesteuert wird, dass Temperierfluid aus der Leckagestelle austritt. Besonders bevorzugt kann das Temperierfluid in diesem Fall elektrisch isolierend beziehungsweise nicht leitend ausgebildet sein. Durch das austretende Temperierfluid an der Leckagestelle, wobei die Leckagestelle insbesondere bevorzugt zumindest in der Nähe des Feuers im Batteriesystem angeordnet ist, kann bereitgestellt werden, dass das Temperierfluid direkt in das Feuer oder zumindest in die Nähe des Feuers geleitet wird. Ein Löschen des Feuers kann auf diese Weise besonders einfach und insbesondere besonders schnell bereitgestellt werden. Falls kein Löschen des Feuers möglich ist, kann durch das strömende Temperierfluid zumindest ein großer Anteil an Wärmeenergie aufgenommen und vom Feuer weg transportiert werden. Vermeidbare thermische Beschädigung des Batteriesystems kann auf diese Weise vermieden werden.

Alternativ kann bei einem erfindungsgemäßen Verfahren vorgesehen sein, dass in Schritt b) die Pumpvorrichtung derart angesteuert wird, dass ein Füllstand an Temperierfluid in der Temperierleitung an oder zumindest in der Nähe der Leckagestelle konstant oder zumindest im Wesentlichen konstant bleibt. Mit anderen Worten wird die Pumpvorrichtung derart angesteuert, dass es an der Leckagestelle lediglich zum Ausgleich des durch die Hitzeeinwirkung des Feuers verdampften Temperierfluids kommt. Ein Austritt von Temperierfluid aus der Leckagestelle wird in dieser Ausgestaltungsform eines erfindungsgemäßen Verfahrens vermieden. Durch das Sicherstellen eines konstanten oder zumindest im Westlichen konstanten Füllstands an oder zumindest in der Nähe der Leckagestelle kann ein Austrocknen der Temperierleitung an der entsprechenden Stelle vermieden werden. Das ständige Nachfüllen von Temperierfluid durch die Pumpvorrichtung kann auch verhindern, dass eine zu große Hitzeeinwirkung auf das betroffene Batterieteilsystem auftritt. Das Temperierfluid kann nur bis maximal zu seiner Siedetemperatur erhitzt werden und verdampft anschließend, wobei das verdampfte Temperierfluid aus der Leckagestelle austritt und das dann fehlende Volumen an Temperierfluid durch die Pumpvorrichtung ständig ersetzt wird. Auch in dieser Ausgestaltungsform eines erfindungsgemäßen Verfahrens kann somit eine zu große thermische Beschädigung des Batteriesystems durch das Feuer vermieden werden. Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind.

Die Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen. Elemente mit gleicher Funktion und Wirkungsweise sind in den Figuren mit denselben Bezugszeichen versehen. Es zeigen schematisch:
- Fig. 1: ein erfindungsgemäßes Verfahren, und
- Fig. 2: ein erfindungsgemäßes Batteriesystem mit einer erfindungsgemäßen Temperiervorrichtung.

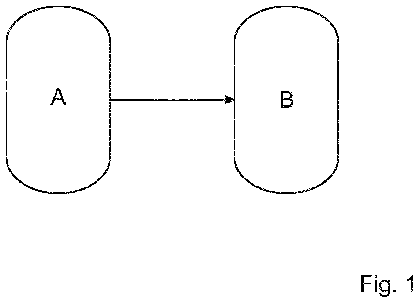

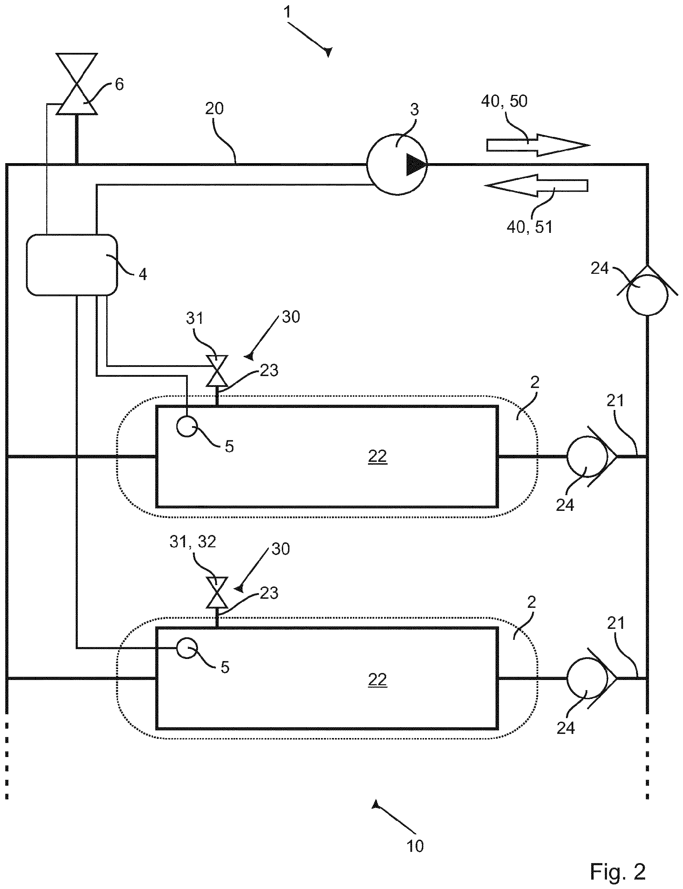

In Fig. 1 ist schematisch ein erfindungsgemäßes Verfahren gezeigt. Die Schritte a) und b) eines erfindungsgemäßen Verfahrens sind mit den Buchstaben A und B bezeichnet. Ein erfindungsgemäßes Verfahren wird durch ein erfindungsgemäßes Batteriesystem 1 bzw. unter Verwendung einer erfindungsgemäßen Temperiervorrichtung 10 ausgeführt, wie sie in Fig. 2 gezeigt sind. Die beiden Figuren werden daher im Folgenden gemeinsam beschrieben, wobei auf die einzelnen Figuren jeweils gesondert eingegangen wird.

Ein erfindungsgemäßes Batteriesystem 1 weist zumindest ein Batterieteilsystem 2 auf, wobei in der dargestellten Ausgestaltungsform eines erfindungsgemäßen Batteriesystems 1 zwei Batterieteilsysteme 2 gezeigt sind. Die Batterieteilsysteme 2 können beispielsweise in Batterieebenen zusammengefasst, die Batterieebenen wiederum zu einem Batteriestapel des Batteriesystems 1 aufgetürmt sein. Hohe Leistungen eines derartigen Batteriesystems 1 können dadurch erreicht werden, beispielsweise für einen Einsatz in einem Fahrzeug. Grundsätzlich ist eine erfindungsgemäße Temperiervorrichtung 10 zum Temperieren der Batterieteilsysteme 2 des Batteriesystems 1 ausgebildet. Dafür weist die Temperiervorrichtung 10 eine Temperierleitung 20 auf, in der durch eine Pumpvorrichtung 3 ein Temperierfluid 40 in einer ersten Strömungsrichtung 50 umgewälzt wird. Die Temperierleitung 20 ist bevorzugt Teil eines geschlossenen Temperierkreislaufs. Den einzelnen Batterieteilsystemen 2 sind jeweils ein Temperierabschnitt 22 der Temperierleitung 20 zugeordnet, wobei in dieser Ausgestaltungsform die einzelnen Batterieteilsysteme 2 jeweils durch einen Temperierzweig 21 der Temperierleitung 20 mit Temperierfluid 40 versorgt werden. Die Temperierabschnitte 22 sind mit dem jeweiligen Batterieteilsystem 2 thermisch leitend verbunden, so dass beim Strömen des Temperierfluids 40 in der ersten Strömungsrichtung 50 thermische Energie beim Vorbeiströmen im Temperierabschnitt 22 vom Batterieteilsystem 2 in das Temperierfluid 40 und/oder vom Temperierfluid 40 in das Batterieteilsystem 2 transferiert werden kann. Ein effektives Temperieren der Batterieteilsysteme 2 und damit des gesamten Batteriesystems 1 kann auf diese Weise bereitgestellt werden.

Erfindungswesentlich ist in der erfindungsgemäßen Temperiervorrichtung 10 in der Temperierleitung 20 zumindest ein Rückschlagventil 24 angeordnet. Das Rückschlagventil 24 ist derart angeordnet, dass es sich in Bezug auf die erste Strömungsrichtung 50 vor den Temperierabschnitten 22 befindet. Wie abgebildet kann das Rückschlagventil 24 in einem zentralen Abschnitt der Temperierleitung 20 angeordnet sein, jedoch auch in jedem einzelnen Temperierzweig 21. Bei einer Strömung des Temperierfluids 40 in einer ersten Strömungsrichtung 50, wie sie im Normal- oder Temperierbetrieb durch die Pumpvorrichtung 3 erzeugt wird, sind die Rückschlagventile 24 durchgängig. Ein Strömen des Temperierfluids 40 in dieser ersten Strömungsrichtung 50 wird somit durch die Rückschlagventile 24 nicht oder nur unwesentlich behindert. Die Rückschlagventile 24 kommen insbesondere dann zum Einsatz, wenn die erfindungsgemäße Temperiervorrichtung 10 zum Löschen eines Feuers im Inneren des Batteriesystems 1 eingesetzt werden soll. Ein derartiges Feuer kann in einem Schritt a) eines erfindungsgemäßen Verfahrens beispielsweise durch Sensorvorrichtungen 5 erkannt werden, die im Inneren des Batteriesystems 1, beispielsweise zugeordnet jedem Batterieteilsystem 2, angeordnet sind. Auch ein Überwachen eines Überdruckventils 6 durch einen entsprechenden Sensor kann vorgenommen werden. In einer Kontrolleinheit 4 werden die Daten der Sensorvorrichtungen 5 gesammelt und ausgewertet und beispielsweise bei einem Überschreiten einer Temperaturschwelle und/oder einer Druckschwelle ein Feuer im Inneren des Batteriesystems 1 erkannt. Auch ein Öffnen des Überdruckventils 6 kann ein derartiges Feuer im Inneren des Batteriesystems 1 anzeigen, da insbesondere durch ein derartiges Feuer ein lokales Verdampfen des Temperierfluids 40 auftreten kann, welches anschließend in der Temperierleitung 20 aufsteigt, bis der Druck derart hoch ist, dass das Überdruckventil 6 öffnet. Im Falle eines erkannten Feuers wird im Schritt b) eines erfindungsgemäßen Verfahrens durch die Kontrolleinheit 4 die Pumpvorrichtung 3 derart angesteuert, dass eine Pumprichtung der Pumpvorrichtung 3 umgekehrt wird. Somit wird das Temperierfluid 40 in der zweiten Strömungsrichtung 51 durch die Temperierleitungen 20 gepumpt. Die Rückschlagventile 24 sperren jedoch in diese Richtung, so dass grundsätzlich ein Fließen des Temperierfluids 40 in der zweiten Strömungsrichtung 51 blockiert ist. Jedoch weisen in dieser bevorzugten Ausgestaltungsform einer erfindungsgemäßen Temperiervorrichtung 10 die Temperierabschnitte 22 jeweils einen Sicherheitsabschnitt 23 auf, der zum lokalen Erzeugen einer Leckagestelle 30 im Falle eines Feuers ausgebildet ist. Dargestellt sind zwei verschiedene Ausgestaltungsformen von Leckagestellen 30, die jedoch auch gemeinsam verwendet werden können. In der oberen Ausgestaltungsform weist der Sicherheitsabschnitt 23 ein Ventilelement 31 auf, das durch die Kontrolleinheit 4 ansteuerbar ist. Beim Erkennen eines Feuers, beispielsweise durch die entsprechende Sensorvorrichtung 5, wird das Ventilelement 31 angesteuert und geöffnet, so dass lokal kontrolliert eine Leckagestelle 30 in der Temperierleitung 20 entsteht. Der ansonsten durch die Rückschlagventile 24 blockierte Strömungsweg des Temperierfluids 40 in der zweiten Strömungsrichtung 51 ist somit lokal durch die entsprechende Leckagestelle 30 geöffnet. Auf diese Weise kann Temperierfluid 40 derart durch die Pumpvorrichtung 3 in der zweiten Strömungsrichtung 51 gefördert werden, dass es aus der entsprechenden Leckagestelle 30 ausströmt und auf diese Weise das dort vorhandene Feuer löscht. Alternativ kann auch vorgesehen sein, dass die Pumpvorrichtung 3 derart angesteuert wird, dass ein Füllstand vom Temperierfluid 40 an der Leckagestelle 30 konstant oder zumindest im Wesentlichen konstant gehalten wird. Ein Austrocknen und damit Überhitzen des entsprechenden Batterieteilsystems 2 kann auf diese Weise ebenfalls vermieden werden. In der unteren Abbildung ist eine alternative Ausgestaltungsform einer Leckagestelle 30 einer erfindungsgemäßen Temperiervorrichtung 10 gezeigt. In dieser Ausgestaltungsform ist das Ventilelement 31 als Berstventil 32 ausgebildet. Dieses Berstventil 32 öffnet automatisch, sobald das Temperierfluid 40 eine Grenztemperatur und/oder einen Grenzdruck überschreitet. Eine Ansteuerung durch eine Kontrolleinheit 4 ist in diesem Fall nicht nötig. Ein derartiges Berstventil 32 stellt somit eine besonders ausfallsichere Variante zur Erzeugung einer präzis lokalisierten Leckagestelle 30 dar. In beiden Ausgestaltungsvarianten kann bevorzugt vorgesehen sein, dass in der Temperiervorrichtung 10 ein Temperierfluid 40 verwendet wird, dass elektrisch isolierend ausgebildet ist. Ein durch austretendes Temperierfluid 40 verursachter Kurzschluss im Batteriesystem 1 kann dadurch sicher verhindert werden. Insgesamt kann durch eine erfindungsgemäße Temperiervorrichtung 10 in einem erfindungsgemäßen Batteriesystem 1 bereitgestellt werden, dass durch die Umkehrung der Pumpvorrichtung 3 und der speziell durch die Leckagestelle 30 erzeugten lokalen Öffnung der Temperierleitung 20 ein definiertes Fließen oder zumindest Heranführen von Temperierfluid 40 an eine Position eines Feuers im Inneren des Batteriesystems 1 bereitgestellt werden kann. Ein derartiges Feuer kann somit schnell gelöscht oder zumindest deren thermische Auswirkungen minimiert werden. Zusätzliche Löschvorrichtungen können somit insbesondere durch die Verwendung einer erfindungsgemäßen Temperiervorrichtung 10 vermieden werden.

### Bezugszeichen

- 1: Batteriesystem
- 2: Batterieteilsystem
- 3: Pumpvorrichtung
- 4: Kontrolleinheit
- 5: Sensorvorrichtung
- 6: Überdruckventil

- 10: Temperiervorrichtung

- 20: Temperierleitung
- 21: Temperierzweig
- 22: Temperierabschnitt
- 23: Sicherheitsabschnitt
- 24: Rückschlagventil

- 30: Leckagestelle
- 31: Ventilelement
- 32: Berstventil

- 40: Temperierfluid

- 50: erste Strömungsrichtung
- 51: zweite Strömungsrichtung

## Patentansprüche

1. Temperiervorrichtung (10) für eine Temperierung und ein Löschen eines Feuers oder eines Brandes eines Batteriesystems (1) mit zumindest einem Batterieteilsystem (2), die Temperiervorrichtung (10) aufweisend eine Temperierleitung (20) zum Leiten eines Temperierfluids (40) und eine Pumpvorrichtung (3) zum Erzeugen einer Strömung des Temperierfluids (40) in der Temperierleitung (20) zumindest in einer ersten Strömungsrichtung (50), wobei die Temperierleitung (20) zumindest einen mit dem zumindest einen Batterieteilsystem (2) thermisch leitend verbindbaren Temperierabschnitt (22) zur Zufuhr und/oder Abfuhr von Wärmeenergie zu dem oder von dem Batterieteilsystem (2) aufweist, **dadurch gekennzeichnet, dass** in der Temperierleitung (20) bezüglich der ersten Strömungsrichtung (50) vor dem zumindest einen Temperierabschnitt (22) ein Rückschlagventil (24) angeordnet ist, wobei das Rückschlagventil (24) in der ersten Strömungsrichtung (50) für das Temperierfluid (40) durchgängig ist und in einer zweiten Strömungsrichtung (51) sperrt, wobei die zweite Strömungsrichtung (51) der ersten Strömungsrichtung (50) entgegengesetzt ist, und wobei das Temperierfluid an den Ort des Feuers zum Löschen zuführbar ist.

2. Temperiervorrichtung (10) nach Anspruch 1, **dadurch gekennzeichnet, dass** die Pumpvorrichtung (3) zum Bereitstellen des Temperierfluids (40) an einer, insbesondere durch ein Feuer erzeugten, Leckagestelle (30) zum Erzeugen einer Strömung des Temperierfluids (40) in der Temperierleitung (20) in der zweiten Strömungsrichtung (51) ausgebildet ist.

3. Temperiervorrichtung (10) nach Anspruch 2, **dadurch gekennzeichnet, dass** die Temperierleitung (20) am Temperierabschnitt (22) und/oder in der Nähe des Temperierabschnitts (22) einen Sicherheitsabschnitt (23) zum kontrollierten Erzeugen, insbesondere bei einem Feuer, der Leckagestelle (30) aufweist.

4. Temperiervorrichtung (10) nach Anspruch 3, **dadurch gekennzeichnet, dass** der Sicherheitsabschnitt (23) ein Ventilelement (31) aufweist, wobei das Ventilelement (31) durch ein kontrolliertes Öffnen bei einer Überschreitung einer Grenztemperatur und/oder eines Grenzdrucks, insbesondere des Temperierfluids (40), durch kontrolliertes Öffnen die Leckagestelle (30) ausbildet.

5. Temperiervorrichtung (10) nach Anspruch 4, **dadurch gekennzeichnet, dass** die Temperiervorrichtung (10) zumindest eine Sensorvorrichtung (5) zum Ermitteln einer Temperatur und/oder eines Drucks und/oder einer Verdampfung des Temperierfluids (40) sowie eine Kontrolleinheit (4) zum Auswerten der durch die Sensorvorrichtung (5) ermittelten Sensordaten und zum Ansteuern des Ventilelements (31) für ein Öffnen des Ventilelements (31) bei einer Überschreitung der Grenztemperatur und/oder des Grenzdrucks aufweist.

6. Temperiervorrichtung (10) nach Anspruch 4, **dadurch gekennzeichnet, dass** das Ventilelement (31) als ein Berstventil (32) ausgebildet ist, das bei einer Überschreitung der Grenztemperatur und/oder eines Grenzdrucks des Temperierfluids (40) durch kontrolliertes Bersten die Leckagestelle (30) ausbildet.

7. Temperiervorrichtung (10) nach einem der vorangegangenen Ansprüche, **dadurch gekennzeichnet, dass** die Temperierleitung (20) mit einem elektrisch isolierenden Temperierfluid (40) gefüllt ist.

8. Temperiervorrichtung (10) nach einem der vorangegangenen Ansprüche, **dadurch gekennzeichnet, dass** das Batteriesystem (1) mehrere Batterieteilsysteme (2) aufweist, wobei die Temperierleitung (20) für jedes der Batterieteilsysteme (2) einen Temperierzweig (21) mit jeweils einem Temperierabschnitt (22) für das jeweilige Batterieteilsystem (2) aufweist, wobei ferner in jedem Temperierzweig (21) bezüglich der ersten Strömungsrichtung (50) vor dem jeweiligen Temperierabschnitt (22) ein Rückschlagventil (24) angeordnet ist, wobei das Rückschlagventil (24) in der ersten Strömungsrichtung (50) durchgängig ist und in einer zweiten Strömungsrichtung (51) sperrt.

9. Temperiervorrichtung (10) nach einem der vorangegangenen Ansprüche, **dadurch gekennzeichnet, dass** die Temperierleitung (20) Teil eines geschlossenen Temperierkreislaufs ist.

10. Temperiervorrichtung (10) nach einem der vorangegangenen Ansprüche, **dadurch gekennzeichnet, dass** in der Temperierleitung (20) ein Überdruckventil (6) angeordnet ist.

11. Batteriesystem (1), aufweisend zumindest ein Batterieteilsystem (2) und eine Temperiervorrichtung (10), **dadurch gekennzeichnet, dass** die Temperiervorrichtung (10) nach einem der vorangegangenen Ansprüche ausgebildet ist.

12. Verfahren zum Temperieren und Löschen eines Batteriesystems (1) gemäß Anspruch 11, wobei für ein Temperieren des Batteriesystems (1) die Pumpvorrichtung (3) eine Strömung des Temperierfluids (40) in der Temperierleitung (20) in der ersten Strömungsrichtung (50) erzeugt, **gekennzeichnet durch folgende Schritte:**
a) Erkennen eines Feuers im Inneren des Batteriesystems (1) durch eine Auswertung von Sensordaten einer Sensorvorrichtung (5) zum Ermitteln einer Temperatur und/oder eines Drucks und/oder einer Verdampfung des Temperierfluids (40), und
b) Ansteuern der Pumpvorrichtung (3) zur Erzeugung einer Strömung des Temperierfluids (40) in der zweiten Strömungsrichtung (51).

13. Verfahren nach Anspruch 12, **dadurch gekennzeichnet, dass** in Schritt b) die Pumpvorrichtung (3) derart angesteuert wird, dass Temperierfluid (40) aus der Leckagestelle (30) austritt.

14. Verfahren nach Anspruch 12, **dadurch gekennzeichnet, dass** in Schritt b) die Pumpvorrichtung (3) derart angesteuert wird, dass ein Füllstand an Temperierfluid (40) in der Temperierleitung (20) an oder zumindest in der Nähe der Leckagestelle (30) konstant oder zumindest im Wesentlichen konstant bleibt.

## Claims

1. Temperature control device (10) for temperature control and extinguishing of a fire or a fire of a battery system (1) with at least one battery subsystem (2), the temperature control device (10) having a temperature control line (20) for conducting a temperature control fluid (40) and a pumping device (3) for generating a flow of the temperature control fluid (40) in the temperature control line (20) at least in a first flow direction (50), the temperature control line (20) having at least one temperature control section (22), which can be connected in a thermally conductive manner to the at least one battery subsystem (2), for supplying and/or removing thermal energy to or from the battery subsystem (2),
**characterized in that**
a non-return valve (24) is arranged in the temperature control line (20) upstream of the at least one temperature control section (22) with respect to the first flow direction (50), wherein the non-return valve (24) is open in the first flow direction (50) for the temperature control fluid (40) and closes in a second flow direction (51), wherein the second flow direction (51) is opposite to the first flow direction (50), and wherein the temperature control fluid can be supplied to the location of the fire for extinguishing.

2. Temperature control device (10) according to claim 1,
**characterized in that**
the pumping device (3) is designed to provide the temperature control fluid (40) at a leakage point (30), in particular generated by a fire, for generating a flow of the temperature control fluid (40) in the temperature control line (20) in the second flow direction (51).

3. Temperature control device (10) according to claim 2,
**characterized in that**
the temperature control line (20) has a safety section (23) at the temperature control section (22) and/or in the vicinity of the temperature control section (22) for controlled generation, in particular in the event of a fire, of the leakage point (30).

4. Temperature control device (10) according to claim 3,
**characterized in that**
the safety section (23) has a valve element (31), the valve element (31) forming the leakage point (30) by controlled opening when a limit temperature and/or a limit pressure, in particular of the temperature control fluid (40), is exceeded.

5. Temperature control device (10) according to claim 4,
**characterized in that**
the temperature control device (10) has at least one sensor device (5) for determining a temperature and/or a pressure and/or an evaporation of the temperature control fluid (40) and a control unit (4) for evaluating the sensor data determined by the sensor device (5) and for actuating the valve element (31) for opening the valve element (31) when the limit temperature and/or the limit pressure is exceeded.

6. Temperature control device (10) according to claim 4,
**characterized in that**
the valve element (31) is designed as a burst valve (32) which forms the leakage point (30) by controlled bursting when the limit temperature and/or a limit pressure of the temperature control fluid (40) is exceeded.

7. Temperature control device (10) according to one of the preceding claims, **characterized in that**
the temperature control line (20) is filled with an electrically insulating temperature control fluid (40).

8. Temperature control device (10) according to one of the preceding claims,
**characterized in that**
the battery system (1) has a plurality of battery subsystems (2), the temperature control line (20) having, for each of the battery subsystems (2), a temperature control branch (21) with a respective temperature control section (22) for the respective battery subsystem (2), wherein furthermore a non-return valve (24) is arranged in each temperature control branch (21) upstream of the respective temperature control section (22) with respect to the first flow direction (50), wherein the non-return valve (24) is continuous in the first flow direction (50) and closes in a second flow direction (51).

9. Temperature control device (10) according to one of the preceding claims,
**characterized in that**
the temperature control line (20) is part of a closed temperature control circuit.

10. Temperature control device (10) according to one of the preceding claims,
**characterized in that**
a pressure relief valve (6) is arranged in the temperature control line (20).

11. Battery system (1), having at least one battery subsystem (2) and a temperature control device (10),
**characterized in that**
the temperature control device (10) is designed according to one of the preceding claims.

12. Method for tempering and discharging a battery system (1) according to claim 11, wherein for tempering the battery system (1) the pumping device (3) generates a flow of the temperature control fluid (40) in the temperature control line (20) in the first flow direction (50) ,
**characterized by the following steps:**
a) detection of a fire inside the battery system (1) by evaluating sensor data from a sensor device (5) for determining a temperature and/or a pressure and/or an evaporation of the temperature control fluid (40), and
b) actuating the pumping device (3) to generate a flow of the temperature control fluid (40) in the second flow direction (51).

13. Method according to claim 12,
**characterized in that**
in step b) the pumping device (3) is controlled in such a way that temperature control fluid (40) emerges from the leakage point (30).

14. Method according to claim 12,
**characterized in that**
in step b) the pumping device (3) is controlled in such a way that a filling level of temperature control fluid (40) in the temperature control line (20) remains constant or at least substantially constant at or at least in the vicinity of the leakage point (30).

## Revendications

1. Dispositif de régulation de température (10) pour une régulation de température et une extinction d'un incendie ou d'un feu d'un système de batterie (1) avec au moins un sous-système de batterie (2), le dispositif de régulation de température (10) présentant une conduite de régulation de température (20) pour guider un fluide de régulation de température (40) et un dispositif de pompage (3) pour générer un écoulement du fluide de régulation de température (40) dans la conduite de régulation de température (20) au moins dans une première direction d'écoulement (50), la conduite de régulation de température (20) présentant au moins une section de régulation de température (22) pouvant être reliée de manière thermiquement conductrice à l'au moins un sous-système de batterie (2) pour l' apport et/ou l'évacuation d'énergie thermique vers ou depuis le sous-système de batterie (2),
**caractérisé en ce qu'**
un clapet anti-retour (24) est disposé dans la conduite de régulation de température (20) par rapport au premier direction d'écoulement (50) en amont de l'au moins une section de régulation de température (22), le clapet anti-retour (24) étant ouvert dans le premier direction d'écoulement (50) pour le fluide de régulation de température (40) et étant fermé dans un deuxième direction d'écoulement (51), le deuxième direction d'écoulement (51) étant opposé au premier direction d'écoulement (50), et le fluide de régulation de température pouvant être amené à l'endroit du feu pour être éteint.

2. Dispositif de régulation de température (10) selon la revendication 1,
**caractérisé en ce que**
le dispositif de pompage (3) est conçu pour fournir le fluide de régulation de température (40) à un point de fuite (30), en particulier généré par un feu, pour générer un écoulement du fluide de régulation de température (40) dans la conduite de régulation de température (20) dans le deuxième direction d'écoulement (51).

3. Dispositif de régulation de température (10) selon la revendication 2,
**caractérisé en ce que**
la conduite de régulation de température (20) présente, sur la section de régulation de température (22) et/ou à proximité de la section de régulation de température (22), une section de sécurité (23) pour la génération contrôlée, en particulier en cas d'incendie, du point de fuite (30).

4. Dispositif de régulation de température (10) selon la revendication 3,
**caractérisé en ce que**
la section de sécurité (23) présente un élément de soupape (31), l'élément de soupape (31) formant le point de fuite (30) par une ouverture contrôlée en cas de dépassement d'une température limite et/ou d'une pression limite, en particulier du fluide de régulation de température (40).

5. Dispositif de régulation de température (10) selon la revendication 4,
**caractérisé en ce que**
le dispositif de régulation de température (10) présente au moins un dispositif de capteur (5) pour déterminer une température et/ou une pression et/ou une évaporation du fluide de régulation de température (40) ainsi qu'une unité de contrôle (4) pour évaluer les données de capteur déterminées par le dispositif de capteur (5) et pour commander l'élément de soupape (31) pour une ouverture de l'élément de soupape (31) en cas de dépassement de la température limite et/ou de la pression limite.

6. Dispositif de régulation de température (10) selon la revendication 4,
**caractérisé en ce que**
l'élément de soupape (31) est conçu comme une soupape d'éclatement (32) qui forme le point de fuite (30) par éclatement contrôlé en cas de dépassement de la température limite et/ou d'une pression limite du fluide de régulation de température (40).

7. Dispositif de régulation de température (10) selon l'une des revendications précédentes,
**caractérisé en ce que**
la conduite de régulation de température (20) est remplie d'un fluide de régulation de température (40) électriquement isolant.

8. Dispositif de régulation de température (10) selon l'une des revendications précédentes,
**caractérisé en ce que**
le système de batterie (1) présente plusieurs sous-systèmes de batterie (2), la conduite de régulation de température (20) présentant pour chacun des sous-systèmes de batterie (2) une branche de régulation de température (21) avec respectivement une section de régulation de température (22) pour le sous-système de batterie (2) respectif, un clapet anti-retour (24) étant en outre disposé dans chaque branche de thermorégulation (21) par rapport au premier direction d'écoulement (50) en amont de la section de régulation de température (22) respective, le clapet anti-retour (24) étant ouvert dans le premier direction d'écoulement (50) et fermé dans un deuxième direction d'écoulement (51).

9. Dispositif de régulation de température (10) selon l'une des revendications précédentes,
**caractérisé en ce que**
la conduite de régulation de température (20) fait partie d'un circuit de régulation de température fermé.

10. Dispositif de régulation de température (10) selon l'une des revendications précédentes,
**caractérisé en ce qu'**
une soupape de surpression (6) est disposée dans la conduite de régulation de température (20).

11. Système de batterie (1), présentant au moins un sous-système de batterie (2) et un dispositif de régulation de température (10),
**caractérisé en ce que**
le dispositif de régulation de température (10) est réalisé selon l'une des revendications précédentes.

12. Procédé de mise en température et d'extinction d'un système de batterie (1) selon la revendication 11, dans lequel, pour une mise en température du système de batterie (1), le dispositif de pompage (3) génère un écoulement du fluide de régulation de température (40) dans la conduite de régulation de température (20) dans le premier direction d'écoulement (50) ,
**caractérisé par les étapes suivantes :**
a) Détection d'un incendie à l'intérieur du système de batterie (1) par une évaluation de données de capteur d'un dispositif de capteur (5) pour déterminer une température et/ou une pression et/ou une évaporation du fluide de régulation de température (40), et
b) Commander le dispositif de pompage (3) pour générer un écoulement du fluide de régulation de température (40) dans la deuxième direction d'écoulement (51).

13. Procédé selon la revendication 12,
**caractérisé en ce qu'**
à l'étape b), le dispositif de pompage (3) est commandé de telle sorte que le fluide de régulation de température (40) s'échappe de l'endroit de la fuite (30).

14. Procédé selon la revendication 12,
**caractérisé en ce qu'**
à l'étape b), le dispositif de pompage (3) est commandé de telle sorte qu'un niveau de remplissage en fluide de régulation de température (40) dans la conduite de régulation de température (20) reste constant ou au moins sensiblement constant au niveau ou au moins à proximité du point de fuite (30).
